(19) Europäisches Patentamt

European Patent Office

Office européen des brevets

(11) Veröffentlichungsnummer: **0 027 875 B1**

## (12) EUROPÄISCHE PATENTSCHRIFT

(45) Veröffentlichungstag der Patentschrift: **26.06.85**

(21) Anmeldenummer: **80105179.8**

(22) Anmeldetag: **30.08.80**

(51) Int. Cl.⁴: **G 07 C 5/12,** G 01 D 9/28

(54) **Registrieranordnung für Fahrtschreiber zum Aufzeichnen von dem Geschwindigkeitsdiagramm überlagerten Zeitmarken.**

(30) Priorität: **25.10.79 DE 2943056**

(43) Veröffentlichungstag der Anmeldung:
**06.05.81 Patentblatt 81/18**

(45) Bekanntmachung des Hinweises auf die
Patenterteilung:
**26.06.85 Patentblatt 85/26**

(84) Benannte Vertragsstaaten:
**DE FR GB IT**

(56) Entgegenhaltungen:
**CH-A- 186 012**
**DE-A-2 651 073**
**DE-A-2 820 932**
**DE-B-1 146 679**
**DE-B-1 195 978**
**DE-B-1 281 197**
**US-A-3 012 838**
**US-A-3 274 609**

(73) Patentinhaber: **Kienzle Apparate GmbH**
**Heinrich-Hertz-Strasse**
**D-7730 Villingen-Schwenningen (DE)**

(72) Erfinder: **Schulze, Hartmut**
**Görlitzer Strasse 93**
**D-7730 Villingen-Schwenningen (DE)**

Courier Press, Leamington Spa, England.

**Beschreibung**

Die Erfindung betrifft eine Registrieranordnung für Fahrtschreiber zum Aufzeichnen von einem Geschwindigkeitsdiagramm überlagerten Zeitmarken durch kurzzeitiges Auslenken eines zur Registrierung des Geschwindigkeitsdiagramms quer zur Transportrichtung eines uhrzeitrichtig angetriebenen Aufzeichnungsträgers betätigbaren Registrierorgans in Richtung der Zeitkoordinate.

Die Aufzeichnungen eines Fahrtschreibers dienen bekanntlich einerseits sowohl der Fuhrparkorganisation, d.h. der Beurteilung der Auslastung und des wirtschaftlich sinnvollen Einsatzes des Transportmittels Kraftfahrzeug als auch der Fahrweise des das betreffende Fahrzeug steuernden Fahrers, andererseits der getrennten Erfassung von Zeiten unterschiedlicher Arbeitsarte, die beim Betrieb eines Kraftfahrzeuges von dem Fahrer bzw. einer dem Fahrzeug zugeteilten Mannschaft ausgeführt werden.

Darüber hinaus soll das von einem Fahrtschreiber aufgezeichnete Geschwindigkeitsdiagramm aber auch über den Fahrtablauf in einer Unfallsituation Aufschluß geben, wozu eine möglichst große zeitliche Auflösung des Geschwindigkeitsdiagramms anzustreben ist.

Diese Forderung steht non mit der erstgenannten Registrieraufgabe insofern in Widerspruch, als es sich bei dieser um Langzeitaufzeichnungen handelt, die zwar in gedrängter Form aufgezeichnet werden können, letzten Endes aber lückenlos erfolgen müssen, da beispielsweise auch Stillstandszeiten eine wesentliche Aussage darstellen.

Für die erstgenannte Registrieraufgabe ist daher die Verwendung auch eines Aufzeichnungsträgers mit relativ' geringer Registrierkapazität, beispielsweise einer Diagrammscheibe, die, wie das bei Fahrtschreibern heute allgemein üblich ist, mit einer Drehzahl von 1/144o ro Minute transportiert wird, durchaus zweckmäßig, zumal dieser Aufzeichnungsträger außer konstruktiven Vorteilen, was beispielsweise den Raumbedarf und die Antriebsmittel anbelangt, eine vorteilhafte Handhabung bietet und sozusagen auf einen Blick eine Kontrolle des Fahrtgeschehens gestattet.

Für die zweitgenannte Registrieraufgabe trifft diese Beurteilung jedoch nicht zu, da hinsichtlich der Unfallauswertung bzw. hinsichtlich der Auswertung größerer Beschleunigungs- und Verzögerungswerte trotz hohen meßmikroskopischen Aufwandes eine Zeitauflösung des Geschwindigkeitsdiagramms unterhalb einer 2-s-Grenze nicht möglich ist und somit derartige Grenzsituationen beim Betrieb eines Kraftfahrzeuges in vielen Fällen nicht befriedigend beurteilt werden können.

Zur Lösung dieses Problems wäre es denkbar, sog. Kurzwegschreiber einzusetzen, die bekanntlich auf einem wegabhängig angetriebenen und fortlaufend löschbaren Aufzeichnungsträger den Geschwindigkeitsverlauf lediglich über einer bestimmten, zuletzt gefahrenen Strecke aufzeichnen und somit eine hohe Auflösung erzielen. Allerdings müßte dann auf die Langzeitregistrierung verzichtet werden, es sie denn, es würde der Aufwand in Kauf genommen werden, einen derartigen Kurzwegschreiber zusätzlich zum üblichen Fahrtschreiber vorzusehen.

Bekannt ist ferner ein Fahrtschreiber, bei dem der Aufzeichnungsträger bei Bedarf mit einer erhöhten Transportgeschwindigkeit antreibbar ist und somit das Geschwindigkeitsdiagramm, wenn erforderlich, gedehnt werden kann. Solche Fahrtschreiber können zwar für bewußt vorzunehmende Bremsprüfungen oder Beschleunigungstests eingesetzt werden, für das Aufzeichnen nicht vorherbestimmbarer Ereignisse, wie sie beispielsweise Unfallsituationen darstellen, sind sie- jedoch nicht geeignet.

Die DE-PS 1 195 978 zeigt demgegenüber eine Einrichtutng, die es gestattet, dem Geschwindigkeitsdiagram des Fahrtschreibers eine zusätzliche Information zu überlagern, indem der das Geschwindigkeitsdiagramm aufzeichnende Schreibstift wegabhängig gesteuert kurzzeitig von der Diagrammscheibe abgehoben wird. Ein derartiges Geschwindigkeitsdiagramm ermöglicht hinsichtlich einer Unfallsituation ein Auszählen des Bremsweges auf relativ einfache Weise. Die Ermittlung mittlerer Beschleunigungswerte anhand der jeweiligen Geschwindigkeitsdiagrammabschnitte bereitet aber erhebliche meßtechnische Probleme. Ein weiterer und entscheidender Nachteil dieser Einrichtung ist jedoch darin zu sehen, daß abgesehen vom Fertigungsaufwand und den registriertechnischen Mängeln, die beim fortlaufenden Abheben eines Schreibstiftes vom Aufzeichnungsträger und Wiederaufsetzen desselben gegeben sind, gerade bei sehr raschen Geschwindigkeitsänderungen, also in Unfall- bzw. unfallähnlichen Situationen, die Unterbrechungen im Geschwindigkeitsdiagramm relativ groß sind und somit die Gefahr besteht, daß wesentliche Informationen' nicht erfaßt werden.

Auch die DE-AS 1 281 197 . zeigt eine Anordnung zur Überlagerung des Geschwindigkeitsdiagramms im Fahrtschreiber mit einer zusätzlichen Information. Dabei wird der das Geschwindigkeitsdiagramm aufzeichnende Schreibstift bei extremen Beschleunigungen bzw. Verzögerungen in Richtung der Zeitkoordinate verschwenkt. Somit ist gegenüber der vorstehend beschriebenen Registriereinrichtung zwar der Nachteil von Registrierlücken vermieden, es werden aber, de die absoluten Werte von Beschleunigungen bzw. Bremswegen anhand einer derartigen Ja-Nein-Aussage nicht ermittelbar sind, wesentliche Beurteilungskriterien des Fahrtablaufs unterdrückt. Darüber hinaus wird mit dieser Anordnung, indem eine der beiden Führungsstangen, auf denen der Registrierschlitten verschiebbar gelagert ist, schwenkbar angeordnet ist, die für die Geschwindigkeitsaufzeichnung erforderliche Präzision der Registrierschlittenführung aufgegeben.

Ziel der vorliegenden Erfindung war es daher, die Auflösbarkeit des Geschwindigkeitsdiagramms eines Fahrtschreibers durch Überlagerung einer Zusatzinformation derart zu verbessern, daß die Analyse von Beschleunigungsvorgängen, insbesondere die Auswertung von Unfallsituationen, mit einfacheren Mitteln und größerer Genauigkeit erfolgen kann, wobei die geschilderten Mängel bekannter, dem gleichen Zweck dienender Registriereinrichtungen vermieden sind.

Die Lösung dieser Aufgabe sieht vor, daß die Registrieranordnung in an sich bekannter Weise einen auf ortsfest angeordneten Führungsstangen parallel zum Aufzeichnungsträger bewegbar gelagerten Schlitten umfaßt, auf dem das Registrierorgan im wesentlichen senkrecht zum Aufzeichnungsträger federnd gelagert ist, und daß ein von einem Kurze Impulse Konstanter Folgeperiode liefernden Impulsgeber erregbarer Elektromagnet vorgesehen und der Schlitten mittels des Elektromagneten derart magnetisch beeinflußbar ist, daß das Registrierorgan ausschließlich durch Ändern der Richtung des zwischen dem Schlitten und den Führungsstangen aufgrund des Registrierdrucks bestehenden Lagerspielausgleichs in Richtung der Zeitkoordinate des Aufzeichnungsträgers auslenkbar ist.

Ein Ausführungsbeispiel der Erfindung ist dadurch gekennzeichnet, daß der Elektromagnet dem mit einem ferromagnetischen Element versehenen Schlitten derart zugeordnet ist, daß in bezug auf eine der beiden Führungsstangen am Schlitten ein Drehmoment ausübbar ist und eine Änderung des Lagerspielausgleichs lediglich bei der bzw den an der anderen Führungsstange befindlichen Lagerung (en) des Schlittens erfolgt.

Als besondere Ausführungsvariante kann der Schlitten aus ferromagnetischem Material hergestellt sein.

Ausgehend von der Erkenntnis, daß das Überlagern der Geschwindigkeitsdiagrammspur mit einer Zusatzinformation durch Verschwenken des Registrierschlittens innerhalb eines minimalen Lagerspiels, wie es bei einer hochgenauen Führung erfoderlich ist, erzielt werden kann, bietet die Erfindung den Vorteil äußerst geringen Fertigungs- und Montageaufwandes, wobei, was als besonders vorteilhaft anzusehen ist, die für die Genauigkeit der Aufzeichnungen entscheidende Ausbildung und Anordnung der Geschwindigkeitsregistriermittel in der bisher üblichen und bewährten Weise beibehalten werden kann, so daß ohne weiteres auch ein Umrüsten bzw. Nachrüsten bereits fertiggestellter oder im Betrieb befindlicher Fahrtschreiber durchführbar ist. Infolge der durch das gegebene Lagerspiel extrem kurzzeitigen, in einer Größenordnung von 4 ms liegenden Auslenkung des Registrierorgans aus der Geschwindikgeitsregistrierspur ist ferner der Informationsverlust hinsichtlich der Geschwindigkeitsaufzeichnung vernachlässigbar klein. Andererseits läßt sich, wenn beispielsweise ein Takt von 1 Impuls/s gewählt wird, gegenüber der genannten Auflösungsgrenze eine Genauigkeitssteigerung hinsichtlich der Auswertung des Geschwindigkeitsdiagramms von 100 % erreichen. Wird auf diese Genauigkeitssteigerung ganz oder teilweise verzichtet, können bei der Herstellung des dem Diagrammscheibentransport dienenden Laufwerks größere Fertigungstoleranzen in Kauf genommen werden, so daß eine geringere Ausschußrate erzielbar ist, Es ist aber auch denkbar, bei gleicher Auswertegenauigkeit wie bisher entweder eine Verringerung des Diagrammscheibendurchmessers und somit der Außenkonturen des Fahrtschreibers oder eine Einengung des für Geschwindigkeitsaufzeichnungen auf der Diagrammscheibe vorgesehenen Registrierfeldes vorzusehen, so daß Raum für zusätzliche Aufzeichnungen geschaffen wird. Ein weiterer Vorteil ist darin zu sehen, daß die als Zusatzinformation aufgezeichneten, zeitproportionalen Markierungen lediglich bei einer mikroskopischen Betrachtung, wie sie bei Unfallauswertungen ohnehin erforderlich ist, deutlich sichtbar sind und somit beim Betrachten des Geschwindigkeitsdiagramms ohne optische Hilfsmittel nicht störend in Erscheinung treten. Letztlich ist noch erwähnenswert, daß die Erfindung eine berührungslose Bewegungsübertragung auf das Registrierorgan ermöglicht und der Schlitten im einem Falle überhaupt nicht, sonst jedoch nur mit einer sehr geringen zusätzlichen Masse belastet wird.

Im folgenden sei ein bevorzugtes Ausführungsbeispiel der Erfindung anhand der beigefügten Zeichnungen näher erläutert. Dabei zweigen

Fig. 1 eine Draufsicht auf die Geschwindigkeitsregistrieranordnung eines Fahrtschreibers,

Fig. 2 ein Schnittbild der Geschwindigkeitsregistrieranordnung gemäß der Schnittlinie X—Y in Fig. 1,

Fig. 3 eine die geometrischen Verhältnisse darstellende Schemaskizze,

Fig. 4 einen Ausschnitt eines Geschwindigkeitsdiagramms in zehnfacher Vergrößerung.

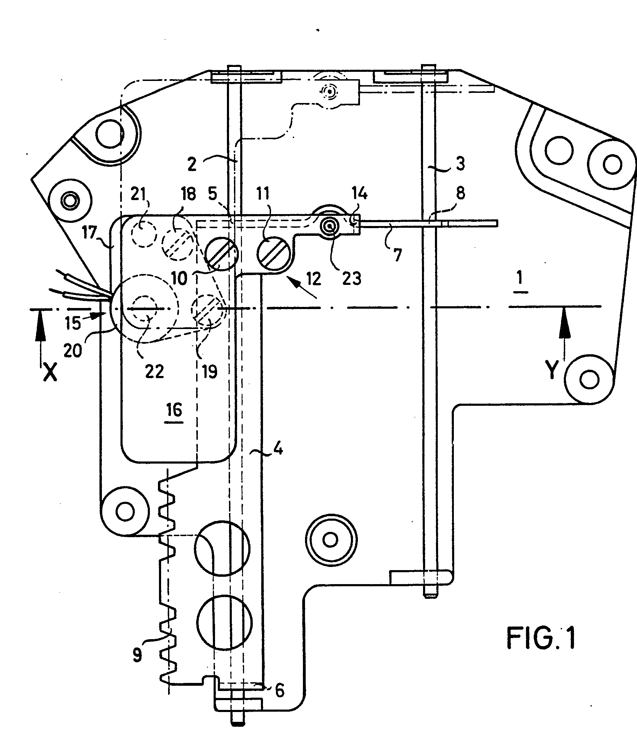

Das in Fig. 1 mit 1 bezeichnete Gestell bildet den Träger einer in den betreffenden Fahrtschreiber einsetzbaren Registrierbaugruppe. Zwei Führungsstangen 2 und 3 sind fest mit dem Gestell 1 verbunden und dienen einem Schlitten 4—der Übersichtlichkeit halber wurde auf eine Darstellung der übrigen, an sich notwendigen Registrierschlitten eines Fahrtschreibers verzichtet—als Lager—und Führungselemente, wobei der im wesentlichen als Lagerbrücke ausgebildete Schlitten 4 mit zwei Lagerungen 5 und 6 auf der einen—2—und mit einer an einem am Schlitten 4 ausgebildeten Steg 7 vorgesehenen, vorzugsweise als Schlitz ausgebildeten Lagerung 8 auf der anderen Führungsstange 3 angeordnet ist. Wie aus Fig. 1 weiter zu entnehmen ist, ist am Schlitten 4 eine Verzahnung 9 ausgebildet, über die der Schlitten 4 getrieblich mit dem, weil nicht erfindungswesentlich, nicht dargestellten Geschwindigkeitsmeßwerk des Fahrtschreibers in Eingriff steht. Der Schlitten 4 trägt ferner einen mittels Schrauben 10 und 11 an ihm befestigten Halter 12, an welchem in bekannter Weise eine der Lagerung des Registrierstiftschaftes 13 dienende Lagerbrücke 14 angeformt ist. Der Halter 12, der aus magnetisch leitfähigem Material hergestellt ist, dient gleichzeitig in einer entsprechend verbreiterten Ausführung einem Elektromagneten 15 als Anker 16, wobei dieser in geringem Abstand über dem Poipaar des Elektromagneten 15 angeordnet ist. Der Elektromagnet 15, welcher mittels einer Rückschlußplatte 17 durch Schrauben 18 und 19 mit dem Gestell 1 verbunden ist, weist ferner eine Spule 20 und in der Rückschlußplatte 17 befestigte Polstifte 21 und 22 auf. Selbstverständlich kann der Elektromagnet 15 auch anders ausgebildet und angeordnet sein, vorzugsweise derart, daß Rückschlußplatte und Polstifte ein Teil bilden. Wesentlich ist jedoch, daß die Pole des Elektromagneten 15 in jeder Stellung des Schlittens 4 vom Anker 16 überdeckt sind.

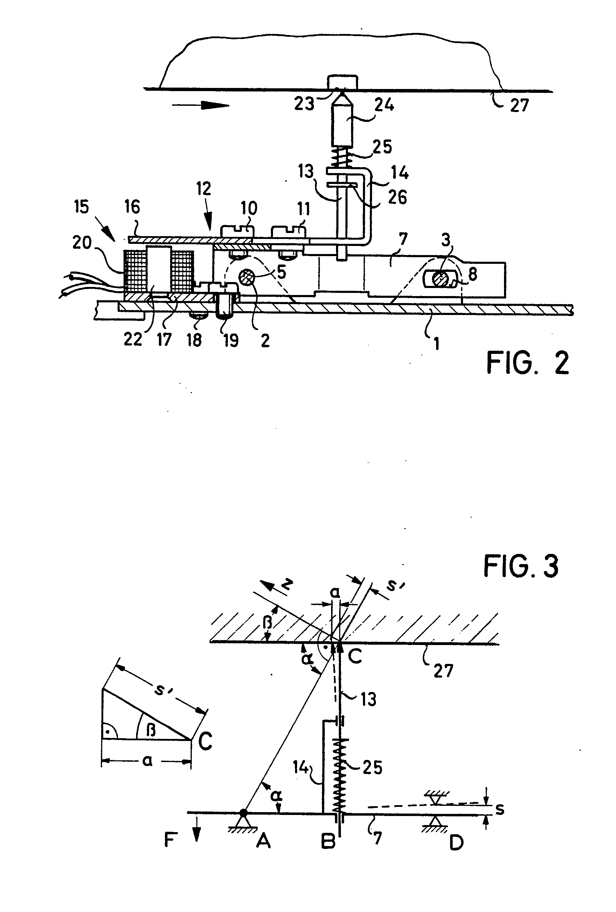

Der Vollständigkeit halber sei noch erwähnt, daß die eigentliche Registrierspitze 23 des Registrierorgans als Saphirspitze ausgebildet und mittels einer geeigneten Fassung 24 mit dem Registrierstiftschaft 13 fest verbunden ist. Eine Feder 25—Fig. 2—liefert die erforderliche Registrierkraft und eine Sicherungsscheibe 26 begrenzt die axiale Beweglichkeit des Registrierorgans, wenn dieses, sei es daß der Fahrtschreiber geöffnet ist oder die Diagrammscheibe fehlt, nicht auf einer Diagrammscheibe 27 aufliegen kann. Ferner sie noch erwähnt, daß der Anker 16 auch als getrenntes Teil am Schlitten 4 befestigt werden kann und daß letzten Endes der Schlitten 4 aus einem ferromagnetischen Material herstellbar ist, und der Anker 16 dann unimittelbar am Schlitten 4 ausgebildet werden könnte.

Wird nun die Spule 20 des Elektromagneten 15 von einem an sich bekannten und somit in diesem Zusammenhang nicht unbedingt darzustellenden Impulsgeber bestromt, so wird der Anker 16 angezogen und der Schlitten 4 auf der Führungsstange 2 verschwenkt, und zwar um das in der Lagerung 8 gegebene Lagerspiel—anders ausgedrückt, es erfolgt eine Änderung der Richtung des gegebenen Lagerspielausgleichs entgegen der Wirkung der Feder 25. Gleichzeitig erfolt ein Auslenken der Registrierspitze 23 aus der Geschwindigkeitsregistrierspur, vorzugsweise weil dadurch das Lagerspiel des Registrierstiftschaftes 13 ausgeglichen bleibt und der volle Hub auf dei Registrierspitze 23 übertragen wird, entgegen der Transportrichtung der Diagrammscheibe 27, was eine entsprechende Anordnung des Elektromagneten 15 erfolderlich macht. Nach dem Abklingen der magnetischen Erregung, die, wie bereits beschrieben, in der Gröbenordnung von 5 ms liegt und beispielsweise mit einem Takt von 1/s erfolgt, wird der Schlitten 4 durch die Feder 25, die somit sowohl Registrier- als auch Rückstellkraft liefert, in seine Ausgangslage zurückgeführt.

Die Bildung der Zeitmarken sowie deren Größenordnung sei im folgenden anhand der Schemaskizze Fig. 3 näher erläutert:

Wird durch die Erregung des Elektromagneten 15 am Schlitten 4 eine Kraft F in der dargestellten Weise (Pfeil) wirksam, bleibt der durch die Wirkung der Feder 25 in den Lagerungen 5 und 6 bestehende Lagerspielausgleich im Punkt A unverändert erhalten, die dort gegebenen Toleranzen G7/h6 bleiben wirkungslos, d.h. der für die folgende Betrachtung anstelle von "5" und "6" neu eingeführte "Punkt A" hat die Funktion des festen Drehpunktes, um den der Schlitten 4 infolge der Kraft F kippt. Dabei wird die mögliche Strecke s, um die der Schlitten 4 kippbar ist, durch die anstelle von "8" ebenfalls neu eingeführte, im "Punkt D" maßgebenden Toleranzen F8/h6 bestimmt. Bei der Kippbewegung des Schlittens 4 wird selbstverständlich auch die Registrierspitze 23 aus ihrer bisherigen Lage verschwenkt, wobei sie sich, wenn sie nicht durch die Diagrammscheibe 27 gezwungen würde, sich in einer Ebene parallel zu den Führungsstangen 2 und 3 zu bewegen, mit ausreichender Näherung auf einer Senkrechten zu der durch die Punkte A and C festgelegten Geraden in Richtung Z, und zwar um die Streck s' bewegen würde.

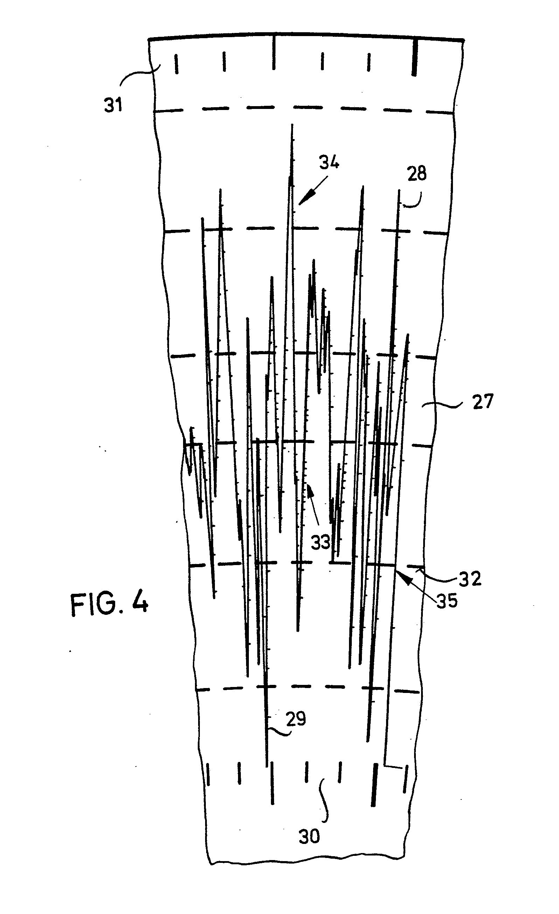

Diese Strecke s' ermittelt sich—ebenfalls mit gewisser Näherung—aus dem Hebelverhältnis $s'/\overline{AC} = s'/\overline{AD}$. Die tatsächliche Auslenkung der Registrierspitze 23, d.h. die Länge der Markierung auf der Diagrammscheibe 27, ergibt sich dann aus $a = s' \cdot \cos \beta$, wobei $\beta$ aus 90°—$\alpha$ errechenbar ist und $\alpha$ aus tang. $\alpha = \overline{BC}/\overline{AB}$ bestimmt werden kann. Die Maße des gewählten Ausführungsbeispiels ($\overline{AB} = 12$ mm, $\overline{AD} = 26$ mm und $\overline{BC} = 23$ mm) ergeben für $\overline{AC} = 29{,}4$ mm und für $\beta \approx 30°$. Außerdem bewegen sich die toleranzabhängigen Werte für s bei der maßgebenden Lagerung im Punkt D infolge der gewählten Passungskombination F8/h6 (+0,021/+0,007 mm und 0/-0,006 mm) zwischen 0,027 mm max. und 0,007 mm min. Daraus errechnen sich, was der Übersichtlichkeit halber im einzelnen nicht näher zu beschreiben sein dürfte, gemäß den oben genannten Formeln die Grenzen der Auslenkung a mit ≈0,026 mm max, und 0,007 mm min. Der daraus gebildete Mittelwert von nahezu 0,017 mm ist völlig ausreichend, um bei einem Auswertemikroskop mit beispielsweise 20 facher Vergrößerung eine deutliche Markierung erkennen zu lassen, während bei bloßer Betrachtung der Diagrammscheibe diese Auslenkungen des Registrierorgans kaum bemerkt werden. Dies zeigt auch der in Fig. 4 dargestellte 10 fach vergrößerte Diagrammausschnitt. Die Markierungen—eine sei mit 28 bezeichneterscheinen an der der Transportrichtung der Diagrammscheibe, auf der in bekannter Weise Uhrzeitskalen 30, 31 sowie Geschwindigkeitsorientierungslinien z. B. 32 aufgedruckt sind, entgegengesetzten Seite der Geschwindigkeitsspur 29, und zwar relativ dichtaufeinander bei mäßigen, sowohl positiven als auch negativen Beschleunigungen, z. B. im Diagrammabschnitt 33, oder mit verhältnismäßig weiten Abständen in den Grenzsituationen, beispielsweise in den Bremsphasen 34 oder 35.

Selbstverständlich ist für die Erzeugung der Zeitmarken auch ein zur Aufzeichnungsebene im wesentlichen paralleles Auslenken des Schlittens 4 denkbar, wobei dann das Spiel der Lagerungen 5 und 6 auf der Führungsstange 2 das Maß für die Größe der Zeitmarken darstellt.

**Patentansprüche**

1. Registrieranordnung für Fahrtschreiber zum Aufzeichnen von einem Geschwindigkeitsdiagramm (29) überlagerten Zeitmarken (18) durch kurzzeitiges Auslenken eines zur Registrierung des Geschwindigkeitsdiagramms quer zur Transportrichtung eines uhrzeitrichtig angetriebenen Aufzeichnungsträgers (27) betätigbaren Registrierorgans (13, 23) in Richtung der Zeitkoordinate, dadurch gekennzeichnet, daß die Registrieranordnung in an sich bekannter Weise einen auf ortsfest angeordneten Führungsstangen (2, 3) parallel zum Aufzeichnungsträger (27) bewegbar gelagerten Schlitten (4) umfaßt, auf dem das Registrierorgan (13, 23) im wesentlichen senkrecht zum Aufzeichnungsträger (27) federnd gelatert ist, und daß ein von einem kurze Impulse Konstanter Folgeperiode liefernden Impulsgeber erregbarer Elektromagnet (15) vorgesehen und der Schlitten (4) mittels des Elektromagneten (15) der art magnetisch beeinflußbar ist, daß das Registrierorgan (13, 23) ausschließlich durch Ändern der Richtung des zwischen dem Schlitten (4) und den Führungsstangen (2, 3) aufgrund des Registrierdrucks bestehenden Lagerspielausgleichs (s) in Richtung der Zeitkoordinate des Aufzeichnungsträgers (27) auslenkbar ist (a).

2. Registrieranordnung nach Anspruch 1, dadurch gekennzeichnet, daß der Elektromagnet (15) dem mit einem ferromagnetischen Element (16) versehenen Schlitten (4) derart zugeordnet ist, daß in bezug auf eine der beiden Führungsstangen (2,3) am Schlitten (4) ein Drehmoment ausübbar ist und eine Änderung des Lagerspielausgleichs lediglich bei der bzw. den auf der anderen Führungsstange (3) befindlichen Lagerung (en) (8) des Schlittens (4) erfolgt.

3. Registrieranordnung nach Anspruch 1, dadurch gekennzeichnet, daß der Schlitten (4) aus ferromagnetischem Material hergestellt ist.

**Revendications**

1. Dispositif d'enregistrement destiné aux enregistreurs de route pour l'inscription de repères de temps (28) superposés à un diagramme de vitesse (29) par une brève déviation dans le sens de la coordonnée de temps d'un organe enregistreur (13, 23) pouvant, pour l'enregistrement du diagramme de vitesse, être actionné transversalement par rapport au sens de transport d'un support d'enregistrement (27) entraîné en fonction du temps réel, caractérisé par le fait que le dispositif d'enregistrement comprend, d'une manière en soi connue, un chariot (4) monté mobile parallélement au support d'enregistrement (27) sur des barres de guidage (2, 3) stationnaires, sur lequel est monté élastiquement, pour l'essentiel perpendiculairement au support d'enregistrement (27), l'organe enregistreur (13, 23), et qu'il est prévu un électro-aimant (15) pouvant, d'une part, être excité par un générateur d'impulsions fournissant des impulsions brèves d'une fréquence de récurrence constante et, d'autre part, exercer une influence magnétique sur le chariot (4) telle que l'organe enregistreur (13, 23) puisse être dévié (a) exclusivement par la variation du sens de la compensation du jeu des paliers (s) existant, en raison de la pression d'enregistrement, entre le chariot (4) et les barres de guidage (2, 3), en direction de la coordonnée de temps du support d'enregistrement (27).

2. Dispositif d'enregistrement selon la revendication 1, caractérisé par le fait que l'électro-aimant (15) est associé au chariot (4) équipé d'un élément ferromagnétique (16), de telle sorte que, par rapport à l'une des deux barres de guidage (2, 3) un couple de rotation puisse être appliqué au chariot (4) et qu'une modification de la compensation du jeu n'ait lieu que sur le ou les paliers (8) du chariot (4) disposé (s) sur l'autre barre de guidage (3).

3. Dispositif d'enregistrement selon la revendication 1, caractérisé par le fait que le chariot (4) est réalisé en un matériau ferromagnétique.

**Claims**

1. Recording device for tachographs for recording time marks (28) overlieing a speed diagram (29) by a shorttime deflection of a recording means (13, 23) in the direction of the time coordinate, which recording means (13, 23) records the speed diagram transverse to the transport direction of a time correctly driven record carrier (27), characterized in that the recording device comprises in a manner known per se a slide (4) which is arranged on mounted arranged guide bars (2), running parallelly to the record carrier (27), on which the recording means (13, 23) is spring mounted essentially vertical to the record carrier (27), and in that an electromagnet (15) is provided which is excited by a pulse generator delivering short pulses of constant frequency, and in that the slide (4) by means of the electromagnet (15) is magnetically influenced so that the recording means (13, 23) may be deflected (a) in the direction of the time coordinate of the record carrier (27) exclusively by modifying the direction of the bearing play compensation (s) existing between the slide (4) and the guide bars (2, 3) due to the recording pressure.

2. Recording device according to Claim 1, characterized in that the electromagnet (15) is attributed to the slide (4) via a ferromagnetic element (16) in such manner that a torque may be applied with respect to one of the guide bars (2, 3) of the slide (4) and in that a modification of the bearing play compensation is effected only with respect to the bearing (8) on the other guide bar (3) of the slide (4).

3. Recording device according to Claim 1 characterized in that the slide (4) is made of ferromagnetic material.

FIG.1

FIG. 2

FIG. 3

FIG. 4